# EUROPÄISCHE PATENTSCHRIFT

(11) **EP 3 138 187 B1**
(45) Veröffentlichungstag und Bekanntmachung des Hinweises auf die Patenterteilung: **08.06.2022**
(21) Anmeldenummer: 15721600.3
(22) Anmeldetag: 23.04.2015
(51) Int. Cl.: H02M 1/00

(54) **PARAMETRISIERBARES ENERGIEVERSORGUNGSGERÄT**
PARAMETERIZABLE POWER SUPPLY
ALIMENTATION EN ENERGIE PARAMETRABLE

(30) Priorität: 28.04.2014 DE 102014105911
(43) Veröffentlichungstag der Anmeldung: 08.03.2017
(73) Patentinhaber: Phoenix Contact GmbH & Co. KG, 32825 Blomberg (DE)
(72) Erfinder: HENKEL, Hartmut, 32825 Blomberg (DE); ZEUCH, Jochen, 32825 Blomberg (DE); SCHWEER, Patrick, Hameln 31785 (DE)
(74) Vertreter: Patentship Patentanwaltsgesellschaft mbH
(86) Internationale Anmeldenummer: PCT/EP2015/058816
(87) Internationale Veröffentlichungsnummer: WO 2015/165798

(56) Entgegenhaltungen:
- EP-A1- 1 775 821
- DE-A1- 19 954 583
- DE-A1-102012 010 487
- KR-A- 20110 029 381
- KR-A- 20110 029 381
- US-A1- 2012 266 007
- US-A1- 2013 127 605
- US-B1- 6 806 434

## Beschreibung

Die vorliegende Erfindung betrifft die Parametrierung eines Energieversorgungsgerätes.

Ein parametrisierbares Energieversorgungsgerät, wie ein universelles Spannungsversorgungsgerät oder ein universelles Stromversorgungsgerät, weist häufig eine vorbestimmte, nicht einstellbare Ausgangskennlinie auf, beispielsweise eine Spannung-Strom-Ausgangskennlinie. Ist das Energieversorgungsgerät beispielsweise als universelles Spannungsversorgungsgerät ausgebildet, kann häufig ein Amplitudenwert einer Ausgangsspannung des parametrisierbaren Energieversorgungsgerätes eingestellt werden, nicht jedoch der Amplitudenwert des korrespondierenden Ausgangsstroms und damit die Spannung-Strom-Ausgangskennlinie des parametrisierbaren Energieversorgungsgerätes.

Die Druckschrift KR 2011 0029381 A1 offenbart fernsteuerbare Energieversorgungen in einem Verbrauchsmesssystem.

Die Druckschrift US 2012/266007 A1 offenbart eine IT-Stromversorgung.

Die Druckschrift EP 1 775 821 A1 offenbart eine Vorrichtung zur Konfiguration des Betriebsverhaltens einer Ladevorrichtung für Akkumulatoren, bei welchem über eine Bedienerschnittstelle die jeweils benötigten Parameterwerte, wie z.B. Ladestrom Ladespannung, Ladedauer und dergleichen mittels einer Recheneinheit für allgemeine Verwendungszwecke einstellbar sind.

Die Druckschrift DE 10 2012 010487 A1 offenbart eine Vorrichtung zum Bewerten eines Alterungszustands einer Batterie.

Die Druckschrift DE 199 54 583 A1 offenbart ein Verfahren zur Einstellung einer Heizungsregelung.

Es ist die der Erfindung zugrundeliegende Aufgabe, ein effizientes Konzept zum Einstellen einer Ausgangskennlinie eines parametrisierbaren Energieversorgungsgerätes anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein parametrisierbares Energieversorgungsgerät gemäß Anspruch 1 gelöst. Dadurch wird der Vorteil erreicht, dass ein parametrisierbares Energieversorgungsgerät mit einer einstellbaren Ausgangskennlinie bereitgestellt werden kann.

Das parametrisierbares Energieversorgungsgerät kann ein elektrisches Energieversorgungsgerät, wie ein Spannungsversorgungsgerät oder ein Stromversorgungsgerät, sein, welches zumindest eine einstellbare Ausgangskennlinie aufweist. Ferner kann das parametrisierbare Energieversorgungsgerät ein elektronisch einstellbares Potentiometer zum Einstellen eines Amplitudenwerts einer Ausgangsspannung oder eines Ausgangsstroms des parametrisierbaren Energieversorgungsgerätes umfassen.

Die Kommunikationsschnittstelle kann eine drahtgebundene und/oder eine drahtlose Kommunikationsschnittstelle umfassen. Beispielsweise umfasst die

Kommunikationsschnittstelle eine serielle Schnittstelle, eine Schnittstelle nach dem Standard Power Management Bus (PMBus), eine Schnittstelle nach dem Standard Universal Serial Bus (USB), eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN). Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die Ausgangskennlinie kann eine Spannung-Strom-Ausgangskennlinie des parametrisierbaren Energieversorgungsgerätes sein. Die Parametrisierungsdaten können eine Ausgangskennlinie oder einen Ausgangskennlinienparameter einer Ausgangskennlinie kennzeichnen oder umfassen. Der Prozessor kann ausgebildet sein, die Ausgangskennlinie durch Auswählen einer vorgespeicherten Ausgangskennlinie und/oder durch Einstellen eines Ausgangskennlinienparameters der Ausgangskennlinie einzustellen. Ferner kann der Prozessor ausgebildet sein, die empfangenen Parametrisierungsdaten auf Gültigkeit zu überprüfen. Beispielsweise werden die Parametrisierungsdaten mittels einer zyklischen Redundanzprüfung, beispielsweise nach dem Standard Cyclic Redundancy Check 8 (CRC-8), auf Gültigkeit überprüft.

Erfindungsgemäßist der Prozessor ausgebildet, auf der Basis der empfangenen Parametrisierungsdaten die Ausgangskennlinie aus einer Mehrzahl von vorgespeicherten Ausgangskennlinien auszuwählen, um die Ausgangskennlinie einzustellen.Zusätzlich kann der Prozessor auf der Basis der empfangenen Parametrisierungsdaten einen Ausgangskennlinienparameter der Ausgangskennlinie des parametrisierbaren Energieversorgungsgerätes einstellen, um die Ausgangskennlinie einzustellen. Dadurch wird der Vorteil erreicht, dass die Ausgangskennlinie effizient eingestellt werden kann.

Die Mehrzahl der vorgespeicherten Ausgangskennlinien kann in einem Speicher des parametrisierbaren Energieversorgungsgerätes vorgespeichert sein.

In einer weiteren vorteilhaften Ausführungsform des parametrisierbaren Energieversorgungsgerätes kennzeichnen die empfangenen Parametrisierungsdaten eine Ausgangskennlinie und/oder einen Ausgangskennlinienparameter einer Ausgangskennlinie, insbesondere einen Ausgangsstrom, eine Ausgangsspannung oder eine Frequenz. Dadurch wird der Vorteil erreicht, dass die Parametrisierungsdaten eine besonders geringe Datenmenge umfassen können.

Erfindungsgemäß ist die Ausgangskennlinie eine der folgenden Ausgangskennlinien: eine Spannung-Strom-Ausgangskennlinie, eine Spannung-Strom-Ausgangskennlinie mit einer Strombegrenzung, eine Foldback-Ausgangskennlinie, eine Hiccup-Mode-Ausgangskennlinie, ein Fuse-Mode-Ausgangskennlinie, eine Ausgangskennlinie mit einem dynamischen Boost, oder eine Ladekennlinie eines Speichermediums. Dadurch wird der Vorteil erreicht, dass eine effiziente Ausgangskennlinie eingestellt werden kann.

In einer weiteren vorteilhaften Ausführungsform des parametrisierbaren Energieversorgungsgerätes ist der Prozessor ausgebildet, auf der Basis der empfangenen Parametrisierungsdaten einen Ausgangskennlinienparameter der Ausgangskennlinie einzustellen, wobei der Ausgangskennlinienparameter der Ausgangskennlinie zumindest einen der folgenden Parameter umfasst: einen Ausgangsstrom, einen Amplitudenschwellwert des Ausgangsstroms, insbesondere einen maximalen Ausgangsstrom, eine Ausgangsspannung, einen Amplitudenschwellwert der Ausgangsspannung, insbesondere eine maximale Ausgangsspannung, eine Frequenz, einen Frequenzschwellwert der Frequenz, einen Zeitpunkt oder eine Zeitspanne. Dadurch wird der Vorteil erreicht, dass eine Ausgangskennlinie des parametrisierbaren Energieversorgungsgerätes verändert werden kann.

Erfindungsgemäß ist der Prozessor ferner ausgebildet, eine Steigung der Ausgangskennlinie bei Erreichen eines Amplitudenschwellwertes durch eine Ausgangsspannung oder einen Ausgangsstrom des parametrisierbaren Energieversorgungsgerätes zu erhöhen oder zu reduzieren oder eine Steigungsrichtung der Steigung zu ändern. Dadurch wird der Vorteil erreicht, dass eine Charakteristik der Ausgangskennlinie eingestellt werden kann.

Die Steigung der Ausgangskennlinie kann positiv, negativ oder Null sein.

In einer weiteren vorteilhaften Ausführungsform des parametrisierbaren Energieversorgungsgerätes ist der Prozessor ferner ausgebildet, zur Einstellung der Ausgangskennlinie einen Amplitudenwert einer Ausgangsspannung oder eines Ausgangsstroms des parametrisierbaren Energieversorgungsgerätes zu einem ersten Zeitpunkt auf einen ersten Amplitudenwert und zu einem zweiten Zeitpunkt auf einen zweiten Amplitudenwert einzustellen. Dadurch wird der Vorteil erreicht, dass eine zeitabhängige Ausgangskennlinie eingestellt werden kann.

Der jeweilige Amplitudenwert und/oder der jeweilige Zeitpunkt können in einem Speicher des parametrisierbaren Energieversorgungsgerätes vorgespeichert oder in den Parametrisierungsdaten umfasst sein.

In einer weiteren vorteilhaften Ausführungsform des parametrisierbaren Energieversorgungsgerätes ist der Prozessor ferner ausgebildet, einen Amplitudenwert einer Ausgangsspannung oder eines Ausgangsstroms des parametrisierbaren Energieversorgungsgerätes gemäß der Ausgangskennlinie nachzuregeln, falls ein Ist-Amplitudenwert der Ausgangsspannung oder des Ausgangsstromes des parametrisierbaren Energieversorgungsgerätes sich von einem jeweils korrespondierenden Sollwert gemäß der Ausgangskennlinie unterscheidet. Dadurch wird der Vorteil erreicht, dass eine effiziente Überwachung und Regelung der Ausgangskennlinie ermöglicht wird.

Der Ist-Amplitudenwert kann durch eine in dem parametrisierbaren Energieversorgungsgerät integrierte Erfassungseinrichtung erfasst werden. Beispielsweise umfasst das parametrisierbare Energieversorgungsgerät einen Mikrocontroller zum Erfassen des Ist-Amplitudenwertes.

In einer weiteren vorteilhaften Ausführungsform des parametrisierbaren Energieversorgungsgerätes ist das parametrisierbare Energieversorgungsgerät mit einem Speicher zum Speichern der empfangenen Parametrisierungsdaten ausgebildet, wobei der Prozessor ausgebildet ist, die Parametrisierungsdaten aus dem Speicher auszulesen und die Ausgangskennlinie des parametrisierbaren Energieversorgungsgerätes auf der Basis der ausgelesenen Parametrisierungsdaten einzustellen. Dadurch wird der Vorteil erreicht, dass die Ausgangskennlinie permanent in dem elektrischen Energieversorgungsgerät gespeichert werden kann.

Der Speicher kann einen elektrisch löschbaren programmierbaren Nur-Lese-Speicher, beispielsweise einen Electrically-Erasable-Programmable-Read-Only-Memory (EEPROM) Speicher, umfassen. Ferner kann der Prozessor ausgebildet sein, die Parametrisierungsdaten bei einer Aktivierung des parametrisierbaren Energieversorgungsgerätes aus dem Speicher auszulesen.

In einer weiteren vorteilhaften Ausführungsform des parametrisierbaren Energieversorgungsgerätes ist die Kommunikationsschnittstelle ausgebildet, die Parametrisierungsdaten über das Kommunikationsnetzwerk von einem Kommunikationsgerät zu empfangen. Dadurch wird der Vorteil erreicht, dass das parametrisierbare Energieversorgungsgerät effizient parametriert werden kann.

Das Kommunikationsgerät kann ein Computer, ein Smartphone oder ein Handgerät sein.

In einer weiteren vorteilhaften Ausführungsform des parametrisierbaren Energieversorgungsgerätes umfasst die Kommunikationsschnittstelle eine drahtlose Kommunikationsschnittstelle. Dadurch wird der Vorteil erreicht, dass das parametrisierbare Energieversorgungsgerät und das Kommunikationsgerät galvanisch getrennt sein können.

In einer weiteren vorteilhaften Ausführungsform des parametrisierbaren Energieversorgungsgerätes umfasst die Kommunikationsschnittstelle eine Nahfeldkommunikationsschnittstelle. Dadurch wird der Vorteil erreicht, dass eine effiziente drahtlose Kommunikationsschnittstelle verwendet werden kann.

Die Nahfeldkommunikationsschnittstelle kann zur Kommunikation mittels Near-Field-Communication (NFC), beispielsweise nach dem Standard ISO/IEC 14443 oder ISO/IEC 18092, ausgebildet sein.

In einer weiteren vorteilhaften Ausführungsform des parametrisierbaren Energieversorgungsgerätes ist die Kommunikationsschnittstelle drahtlos mit elektrischer Energie versorgbar. Dadurch wird der Vorteil erreicht, dass die Ausgangskennlinie in einem deaktivierten Zustand des parametrisierten Energieversorgungsgerätes eingestellt werden kann.

Die Ausgangskennlinie des parametrisierbaren Energieversorgungsgerätes kann ferner eingestellt werden, wenn das parametrisierbare Energieversorgungsgerät in einer Umverpackung aufgenommen ist.

In einer weiteren vorteilhaften Ausführungsform des parametrisierbaren Energieversorgungsgerätes ist die Kommunikationsschnittstelle durch ein Kommunikationsgerät mit elektrischer Energie versorgbar ist. Dadurch wird der Vorteil erreicht, dass das parametrisierbare Energieversorgungsgerät effizient mit elektrischer Energie versorgt werden kann.

Das Kommunikationsgerät kann das parametrisierbare Energieversorgungsgerät ferner über eine drahtgebundene Kommunikationsverbindung, beispielsweise nach dem Standard Universal Serial Bus (USB), mit elektrischer Energie versorgen.

In einer weiteren vorteilhaften Ausführungsform des parametrisierbaren Energieversorgungsgerätes umfasst die Kommunikationsschnittstelle eine Antenne, welche innerhalb eines Gehäuses des parametrisierbaren Energieversorgungsgerätes angeordnet oder in einer Gehäusewand eines Gehäuses des parametrisierbaren Energieversorgungsgerätes integriert ist. Dadurch wird der Vorteil erreicht, dass das parametrisierbare Energieversorgungsgerät eine besonders kompakte Bauform aufweisen kann.

Die Antenne kann durch Leiterbahnen auf einer Platine oder einer Leiterplatte gebildet sein. Ferner kann das Gehäuse des parametrisierbaren Energieversorgungsgerätes ein Kunststoffgehäuse sein oder ein für elektromagnetische Signale durchlässiges Gehäuseelement umfassen.

Gemäß einem zweiten Aspekt der Erfindung wird die Aufgabe durch ein Kommunikationsgerät zum drahtlosen Einstellen einer Ausgangskennlinie eines parametrisierbaren Energieversorgungsgerätes gemäß Anspruch 10 gelöst. Dadurch wird der Vorteil erreicht, dass ein Kommunikationsgerät zum effizienten Einstellen einer Ausgangskennlinie eines parametrisierbaren Energieversorgungsgerätes bereitgestellt werden kann.

Das Kommunikationsgerät kann ein Computer, ein Smartphone oder ein Handgerät sein. Ferner kann das Kommunikationsgerät ein mobiles Kommunikationsgerät sein. Die Benutzerschnittstelle kann eine Tastatur, eine Anzeigeeinrichtung und/oder einen Touchscreen umfassen.

Die Nahfeldkommunikationsschnittstelle kann zur Kommunikation mittels Near-Field-Communication (NFC), beispielsweise nach dem Standard ISO/IEC 14443 oder ISO/IEC 18092, ausgebildet sein.

In einer vorteilhaften Ausführungsform des Kommunikationsgerätes ist die Nahfeldkommunikationsschnittstelle des Kommunikationsgerätes ferner zum drahtlosen Versorgen einer Nahfeldkommunikationsschnittstelle des parametrisierbaren Energieversorgungsgerätes mit elektrischer Energie ausgebildet. Dadurch wird der Vorteil erreicht, dass die Ausgangskennlinie bei deaktiviertem parametrisierbaren Energieversorgungsgerät eingestellt werden kann.

Gemäß einem dritten Aspekt der Erfindung wird die Aufgabe durch ein Verfahren zum Einstellen einer Ausgangskennlinie eines parametrisierbaren Energieversorgungsgerätes gemäß Anspruch 12 gelöst. Dadurch wird der Vorteil erreicht, dass die Ausgangskennlinie des parametrisierbaren Energieversorgungsgerätes auf effiziente Weise eingestellt werden kann.

Das Einstellen der Ausgangskennlinie wird erfindungsgemäß durch Auswählen einer vorgespeicherten Ausgangskennlinie durchgeführt und kann zusätzlich durch Einstellen eines Ausgangskennlinienparameters der Ausgangskennlinie durchgeführt werden.

In einer vorteilhaften Ausführungsform des Verfahrens werden die Parametrisierungsdaten über ein Nahfeldkommunikationsnetzwerk übertragen. Dadurch wird der Vorteil erreicht, dass ein effizientes Kommunikationsnetzwerk verwendet werden kann.

Ausführungsbeispiele der Erfindung sind in den Zeichnungen dargestellt und werden im Folgenden näher beschrieben.

Es zeigen:
- Fig. 1: ein schematisches Diagramm eines parametrisierbaren Energieversorgungsgerätes gemäß einer Ausführungsform;
- Fig. 2: ein schematisches Diagramm eines Kommunikationsgerätes zum drahtlosen Einstellen einer Ausgangskennlinie eines parametrisierbaren Energieversorgungsgerätes gemäß einer Ausführungsform;
- Fig. 3: ein schematisches Diagramm eines Verfahrens zum Einstellen einer Ausgangskennlinie eines parametrisierbaren Energieversorgungsgerätes gemäß einer Ausführungsform;
- Fig. 4: ein schematisches Diagramm zweier Spannung-Strom-Ausgangskennlinien;
- Fig. 5: ein schematisches Diagramm einer Foldback-Ausgangskennlinie;
- Fig. 6: ein schematisches Diagramm einer Hiccup-Mode-Ausgangskennlinie;
- Fig. 7: ein schematisches Diagramm einer Ausgangskennlinie mit einem dynamischen Boost; und
- Fig. 8: ein schematisches Diagramm einer Ladekennlinie eines Speichermediums.

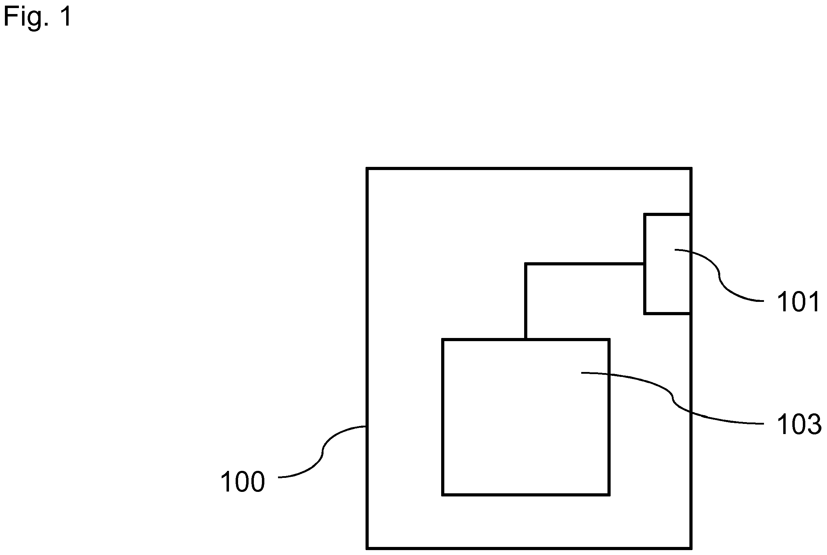

Fig. 1 zeigt ein schematisches Diagramm eines parametrisierbaren Energieversorgungsgerätes 100 gemäß einer Ausführungsform. Das parametrisierbare Energieversorgungsgerät 100 umfasst eine Kommunikationsschnittstelle 101 und einen Prozessor 103.

Das parametrisierbares Energieversorgungsgerät 100 ist ausgebildet mit: der Kommunikationsschnittstelle 101 zum Empfangen von Parametrisierungsdaten über ein Kommunikationsnetzwerk; und dem Prozessor 103, welcher ausgebildet ist, eine Ausgangskennlinie des parametrisierbaren Energieversorgungsgerätes 100 auf der Basis der empfangenen Parametrisierungsdaten einzustellen.

Das parametrisierbares Energieversorgungsgerät 100 kann ein elektrisches Energieversorgungsgerät, wie ein Spannungsversorgungsgerät oder ein Stromversorgungsgerät, sein, welches zumindest eine einstellbare Ausgangskennlinie aufweist. Ferner kann das parametrisierbare Energieversorgungsgerät 100 ein elektronisch einstellbares Potentiometer zum Einstellen eines Amplitudenwerts einer Ausgangsspannung oder eines Ausgangsstroms des parametrisierbaren Energieversorgungsgerätes 100 umfassen.

Die Kommunikationsschnittstelle 101 kann eine drahtgebundene oder eine drahtlose Kommunikationsschnittstelle umfassen. Beispielsweise umfasst die Kommunikationsschnittstelle 101 eine serielle Schnittstelle, eine Schnittstelle nach dem Standard Power Management Bus (PMBus), eine Schnittstelle nach dem Standard Universal Serial Bus (USB), eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN). Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die Ausgangskennlinie kann eine Spannung-Strom-Ausgangskennlinie des parametrisierbaren Energieversorgungsgerätes 100 sein. Die Parametrisierungsdaten können eine Ausgangskennlinie oder einen Ausgangskennlinienparameter einer Ausgangskennlinie kennzeichnen oder umfassen. Der Prozessor 103 kann ausgebildet sein, die Ausgangskennlinie durch Auswählen einer vorgespeicherten Ausgangskennlinie und/oder durch Einstellen eines Ausgangskennlinienparameters der Ausgangskennlinie einzustellen. Ferner kann der Prozessor 103 ausgebildet sein, die empfangenen Parametrisierungsdaten auf Gültigkeit zu überprüfen. Beispielsweise werden die Parametrisierungsdaten mittels einer zyklischen Redundanzprüfung, beispielsweise nach dem Standard Cyclic Redundancy Check 8 (CRC-8), auf Gültigkeit überprüft.

Gemäß einer Ausführungsform kann das parametrisierbare Energieversorgungsgerät 100 oder eine elektrische Energieversorgung derart parametriert werden, dass eine beliebige Ausgangsstrombegrenzung und/oder eine beliebige Ausgangsspannungsbegrenzung eingestellt werden kann.

Gemäß einer weiteren Ausführungsform können die Parametrisierungsdaten oder die jeweiligen Parameter der Begrenzung für Ausgangsspannung, Ausgangsstrom und/oder Ausgangsleistung beliebig angepasst werden.

Gemäß einer weiteren Ausführungsform kann die Kommunikationsschnittstelle 101 eine drahtgebundene oder eine drahtlose Schnittstelle, beispielsweise eine Schnittelle zur drahtlosen Kommunikation mittels Funk, Radio-Frequency-Identification (RFID) oder Near-Field-Communication (NFC) sein oder umfassen.

Gemäß einer weiteren Ausführungsform kann die Kommunikationsschnittstelle 101 als drahtlose Kommunikationsschnittstelle ausgebildet sein, um eine galvanische Trennung zwischen dem parametrisierbaren Energieversorgungsgerät 100 und einem Kommunikationsgerät zum Parametrieren des parametrisierbaren Energieversorgungsgerätes 100 zu erreichen und um Ausgleichsströme über die Kommunikationsschnittstelle 101 zu vermeiden.

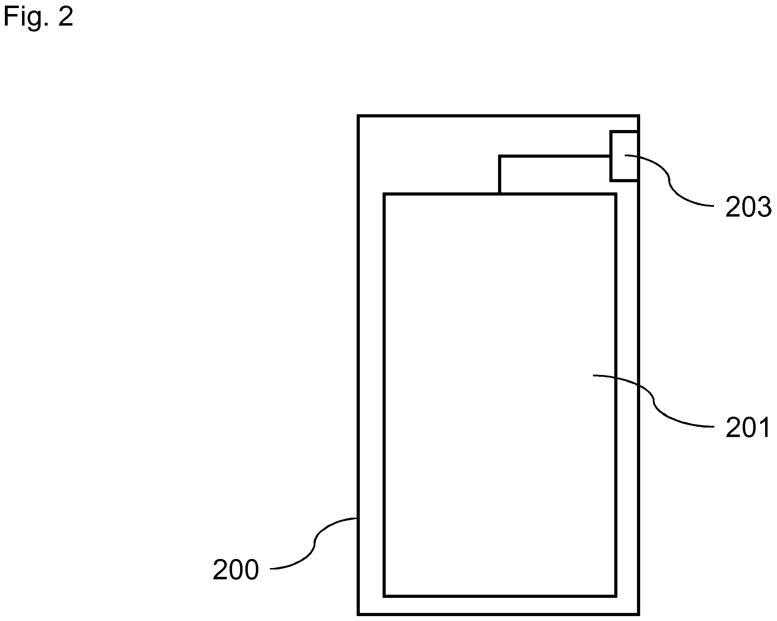

Fig. 2 zeigt ein schematisches Diagramm eines Kommunikationsgerätes 200 zum drahtlosen Einstellen einer Ausgangskennlinie eines parametrisierbaren Energieversorgungsgerätes 100 gemäß einer Ausführungsform. Das Kommunikationsgerät 200 umfasst eine Benutzerschnittstelle 201 und eine Nahfeldkommunikationsschnittstelle 203.

Das Kommunikationsgerät 200 zum drahtlosen Einstellen einer Ausgangskennlinie eines parametrisierbaren Energieversorgungsgerätes 100 ist ausgebildet mit: der Benutzerschnittstelle 201 zum Festlegen von Parametrisierungsdaten; und der Nahfeldkommunikationsschnittstelle 201 zum Aussenden der festgelegten Parametrisierungsdaten an das parametrisierbare Energieversorgungsgerät 100 über ein Nahfeldkommunikationsnetzwerk.

Das Kommunikationsgerät 200 kann ein Computer, ein Smartphone oder ein Handgerät sein. Ferner kann das Kommunikationsgerät 200 ein mobiles Kommunikationsgerät sein. Die Benutzerschnittstelle 201 kann eine Tastatur, eine Anzeigeeinrichtung und/oder einen Touchscreen umfassen.

Die Nahfeldkommunikationsschnittstelle 203 kann zur Kommunikation mittels Near-Field-Communication (NFC), beispielsweise nach dem Standard ISO/IEC 14443 oder ISO/IEC 18092, ausgebildet sein. Ferner kann die Nahfeldkommunikationsschnittstelle 203 des Kommunikationsgerätes 200 zum drahtlosen Versorgen einer Nahfeldkommunikationsschnittstelle des parametrisierbaren Energieversorgungsgerätes 100 mit elektrischer Energie ausgebildet sein.

Gemäß einer Ausführungsform kann mittels des Kommunikationsgerätes 200 eine Parametrierung oder ein Einstellen der Ausgangskennlinie des parametrisierbaren Energieversorgungsgerätes 100 in einem deaktivierten Zustand des parametrisierbaren Energieversorgungsgerätes 100 durchgeführt werden.

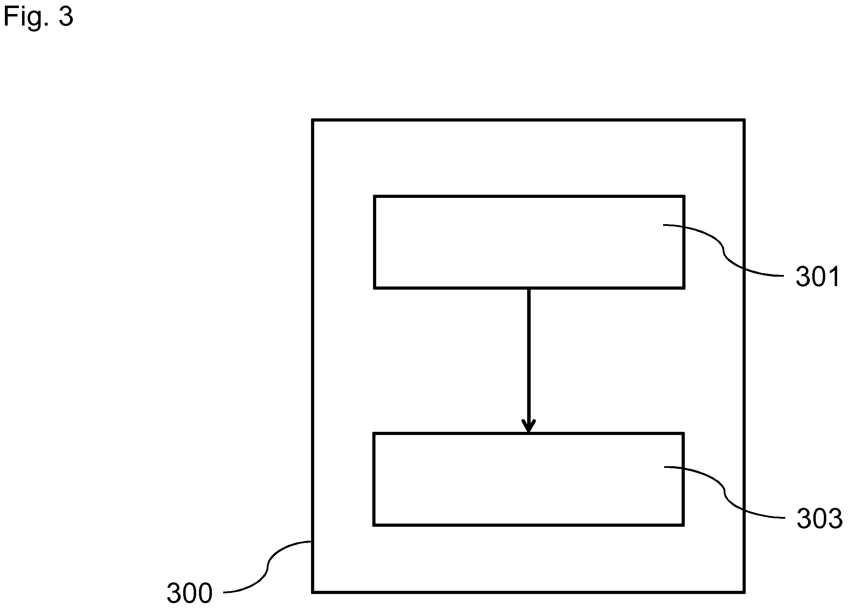

Fig. 3 zeigt ein schematisches Diagramm eines Verfahrens 300 zum Einstellen einer Ausgangskennlinie eines parametrisierbaren Energieversorgungsgerätes 100 gemäß einer Ausführungsform. Das Verfahren 300 umfasst die Verfahrensschritte eines Übertragens 301 und eines Einstellens 303.

Das Verfahren 300 zum Einstellen einer Ausgangskennlinie eines parametrisierbaren Energieversorgungsgerätes 100 umfasst: Übertragen 301 von Parametrisierungsdaten an das parametrisierbare Energieversorgungsgerät 100 über ein Kommunikationsnetzwerk; und Einstellen 303 der Ausgangskennlinie des parametrisierbaren Energieversorgungsgerätes 100 auf der Basis der empfangenen Parametrisierungsdaten.

Das Einstellen 303 der Ausgangskennlinie kann durch Auswählen einer vorgespeicherten Ausgangskennlinie und/oder durch Einstellen eines Ausgangskennlinienparameters der Ausgangskennlinie durchgeführt werden. Ferner können die Parametrisierungsdaten über ein Nahfeldkommunikationsnetzwerk übertragen werden.

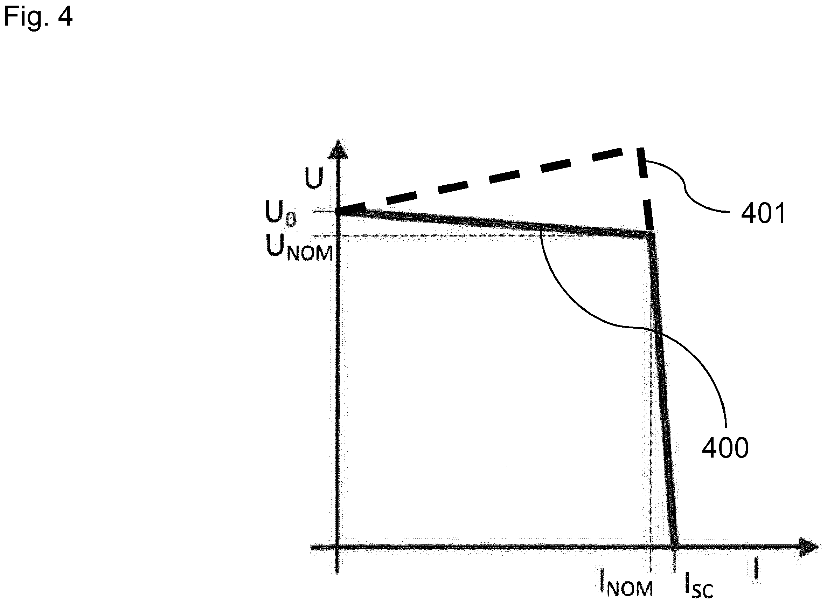

Fig. 4 bis 8 zeigen einstellbare Ausgangskennlinien eines parametrisierbaren Energieversorgungsgerätes 100.

Fig. 4 zeigt ein schematisches Diagramm zweier Spannung-Strom-Ausgangskennlinien 400, 401. An der vertikalen Achse des abgebildeten Koordinatensystems ist eine Ausgangsspannung U eines parametrisierbaren Energieversorgungsgerätes 100 aufgetragen und an der horizontalen Achse ist ein korrespondierender Ausgangsstrom I des parametrisierbaren Energieversorgungsgerätes 100 aufgetragen.

Ist das parametrisierbare Energieversorgungsgerät 100 als eine Spannungsquelle ausgebildet, so ist bei der Spannung-Strom-Ausgangskennlinie 400 in einem Leerlauf des parametrisierbaren Energieversorgungsgerätes 100 die Ausgangsspannung U auf eine Leerlaufausgangsspannung U₀ eingestellt und es fließt kein Ausgangsstrom I. Erhöht sich der Ausgangsstrom I, so sinkt die Ausgangsspannung U linear mit einer ersten Steigung bis zu einer Nennlastausgangsspannung U_{NOM}. Bei Erreichen der Nennlastausgangsspannung U_{NOM} durch die Ausgangsspannung U ist der Ausgangsstrom I auf einen Nennlastausgangsstrom I_{NOM} angestiegen. Dieser Zustand kann einem bevorzugten Betriebszustand des parametrisierbaren Energieversorgungsgerätes 100 entsprechen. Erhöht sich der Ausgangsstrom I weiter, so sinkt die Ausgangsspannung U linear mit einer zweiten Steigung, wobei die zweite Steigung betragsmäßig größer ist als die erste Steigung. Bei Erreichen eines Kurzschlussausgangsstroms l_{SC} durch den Ausgangsstrom I erreicht die Ausgangsspannung U einen Minimalwert. Beispielsweise beträgt der Minimalwert 0,0001V, 0,001V, 0,01V, 0,1V, 1V oder 10V. Die Strombegrenzung des Ausgangsstroms I auf den Kurzschlussausgangsstrom I_{SC} kann einem harten Kurzschluss entsprechen, bei welchem ein Ausgangsstrom I fließt.

Die Leerlaufausgangsspannung U₀ kann einer Ausgangsspannung U im Leerlauf entsprechen. Ferner kann die Nennlastausgangsspannung U_{NOM} einer Ausgangsspannung U bei einer Nennlast entsprechen. Der Nennlastausgangsstrom I_{NOM} kann einem Ausgangsstromgrenzwert bei Nennspannung entsprechen. Ferner kann der Kurzschlussausgangsstrom I_{SC} einem Ausgangsstrom I im Kurzschluss entsprechen.

Ist das parametrisierbare Energieversorgungsgerät 100 als eine Spannungsquelle ausgebildet, so ist bei der Spannung-Strom-Ausgangskennlinie 401 in einem Leerlauf des parametrisierbaren Energieversorgungsgerätes 100 die Ausgangsspannung U auf eine Leerlaufausgangsspannung U₀ eingestellt und es fließt kein Ausgangsstrom I. Erhöht sich der Ausgangsstrom I, so steigt die Ausgangsspannung U linear mit einer dritten Steigung bis zu einer Nennlastausgangsspannung, welche größer als die Nennlastausgangsspannung U_{NOM} der Spannung-Strom-Ausgangskennlinie 400 sein kann. Bei Erreichen der Nennlastausgangsspannung durch die Ausgangsspannung U ist der Ausgangsstrom I auf einen Nennlastausgangsstrom angestiegen, welcher kleiner als der Nennlastausgangsstrom I_{NOM} der Spannung-Strom-Ausgangskennlinie 400 sein kann. Dieser Zustand kann einem bevorzugten Betriebszustand des parametrisierbaren Energieversorgungsgerätes 100 entsprechen. Erhöht sich der Ausgangsstrom I weiter, so sinkt die Ausgangsspannung U linear mit einer vierten Steigung. Bei Erreichen eines Kurzschlussausgangsstroms I_{SC} durch den Ausgangsstrom I erreicht die Ausgangsspannung U einen Minimalwert. Beispielsweise beträgt der Minimalwert 0,0001V, 0,001V, 0,01V, 0,1V, 1V oder 10V. Die Strombegrenzung des Ausgangsstroms I auf den Kurzschlussausgangsstrom I_{SC} kann einem harten Kurzschluss entsprechen, bei welchem ein Ausgangsstrom I fließt.

Gemäß einer Ausführungsform können die Leerlaufausgangsspannung U₀, die Nennlastausgangsspannung U_{NOM}, der Nennlastausgangsstrom I_{NOM}, der Kurzschlussausgangsstrom I_{SC} und/oder die jeweilige Steigung eingestellt werden, um die Ausgangskennlinie einzustellen.

Gemäß einer weiteren Ausführungsform können Ausgangskennlinienparameter der Ausgangskennlinie beliebig erweitert werden. Beispielsweise kann ein Spannungseinbruch über einen Ausgangsstrom einstellbar ausgeführt werden. Ferner kann eine Strombegrenzung in Abhängigkeit von der Ausgangsspannung U eingestellt werden.

Gemäß einer weiteren Ausführungsform kann eine Fuse-Mode-Ausgangskennlinie dem Ausgangskennlinienverlauf einer der Spannung-Strom-Ausgangskennlinien 400, 401 entsprechen. Wird jedoch ein vorbestimmter Stromgrenzwert durch den Ausgangsstrom I überschritten oder ein vorbestimmter Spannungsgrenzwert durch die Ausgangsspannung U unterschritten, kann sich das parametrisierbare Energieversorgungsgerät 100 nach Ablauf einer vorbestimmten Zeitspanne selbstständig abschalten. Beispielsweise kann das parametrisierbare Energieversorgungsgerät 100 durch einen Benutzer manuell wieder eingeschaltet oder zurückgesetzt werden.

Gemäß einer weiteren Ausführungsform kann das parametrisierbare Energieversorgungsgerät 100 als Stromquelle ausgebildet sein. In diesem Fall können ebenfalls die Spannung-Strom-Ausgangskennlinien 400, 401 wie oben beschrieben durchlaufen werden. Es sind lediglich Spannungen und Ströme gegeneinander zu vertauschen.

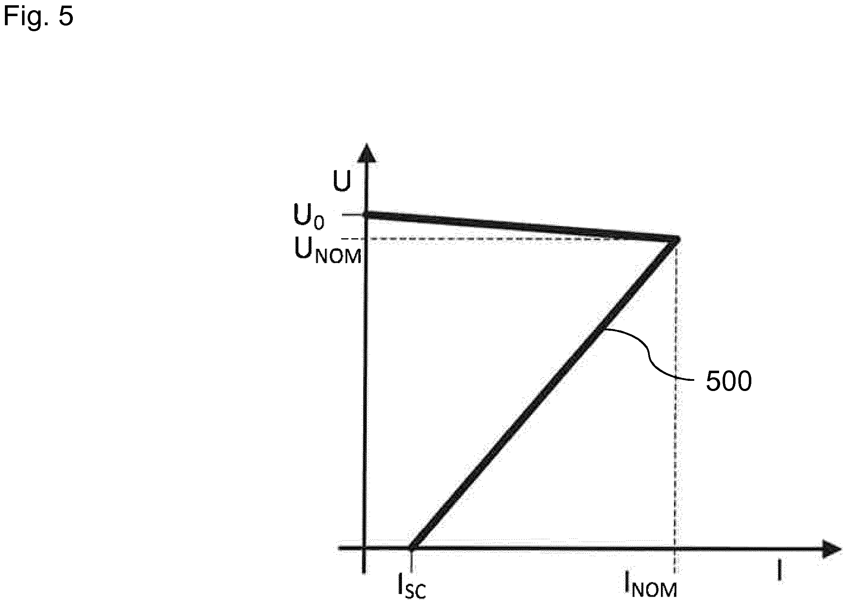

Fig. 5 zeigt ein schematisches Diagramm einer Foldback-Ausgangskennlinie 500. An der vertikalen Achse des abgebildeten Koordinatensystems ist eine Ausgangsspannung U eines parametrisierbaren Energieversorgungsgerätes 100 aufgetragen und an der horizontalen Achse ist ein korrespondierender Ausgangsstrom I des parametrisierbaren Energieversorgungsgerätes 100 aufgetragen.

Ist das parametrisierbare Energieversorgungsgerät 100 als eine Spannungsquelle ausgebildet, so ist in einem Leerlauf des parametrisierbaren Energieversorgungsgerätes 100 die Ausgangsspannung U auf eine Leerlaufausgangsspannung U₀ eingestellt und es fließt kein Ausgangsstrom I. Erhöht sich der Ausgangsstrom I, so sinkt die Ausgangsspannung U linear mit einer ersten Steigung bis zu einer Nennlastausgangsspannung U_{NOM}. Bei Erreichen der Nennlastausgangsspannung U_{NOM} durch die Ausgangsspannung U ist der Ausgangsstrom I auf einen Nennlastausgangsstrom I_{NOM} angestiegen. Im weiteren Verlauf sinken die Ausgangsspannung U und der Ausgangsstrom I linear mit einer zweiten Steigung, wobei die zweite Steigung betragsmäßig größer ist als die erste Steigung. Bei Erreichen eines Kurzschlussausgangsstroms I_{SC} durch den Ausgangsstrom I erreicht die Ausgangsspannung U einen Minimalwert. Beispielsweise beträgt der Minimalwert 0,0001V, 0,001V, 0,01V, 0,1V, 1V oder 10V. Die Strombegrenzung des Ausgangsstroms I auf den Kurzschlussausgangsstrom I_{SC} kann einem harten Kurzschluss entsprechen, bei welchem ein Ausgangsstrom I fließt.

Gemäß einer Ausführungsform kann die Nennlastausgangsspannung U_{NOM} größer sein als die Leerlaufausgangsspannung U₀. In diesem Fall steigt die Ausgangsspannung U bei einer Erhöhung des Ausgangsstroms I linear mit einer weiteren Steigung von der Leerlaufausgangsspannung U₀ bis zu der Nennlastausgangsspannung U_{NOM} an.

Gemäß einer Ausführungsform können die Leerlaufausgangsspannung U₀, die Nennlastausgangsspannung U_{NOM}, der Nennlastausgangsstrom I_{NOM}, der Kurzschlussausgangsstrom I_{SC} und/oder die jeweilige Steigung eingestellt werden, um die Ausgangskennlinie einzustellen.

Gemäß einer weiteren Ausführungsform kann das parametrisierbare Energieversorgungsgerät 100 bis zu dem Nennlastausgangsstrom I_{NOM} oder einem Stromgrenzwert in einer Spannungsregelung betrieben werden. Im weiteren Verlauf kann das parametrisierbare Energieversorgungsgerät 100 bis zu einem harten Kurzschluss in einer Strombegrenzung betrieben werden. Der Nennlastausgangsstrom I_{NOM} oder der Stromgrenzwert kann bei sinkender Ausgangsspannung U reduziert werden, um in einem Überlastfall eine Kabelbelastung zu reduzieren.

Gemäß einer weiteren Ausführungsform kann das parametrisierbare Energieversorgungsgerät 100 als Stromquelle ausgebildet sein. In diesem Fall kann ebenfalls die Foldback-Ausgangskennlinie 500 wie oben beschrieben durchlaufen werden. Es sind lediglich Spannungen und Ströme gegeneinander zu vertauschen.

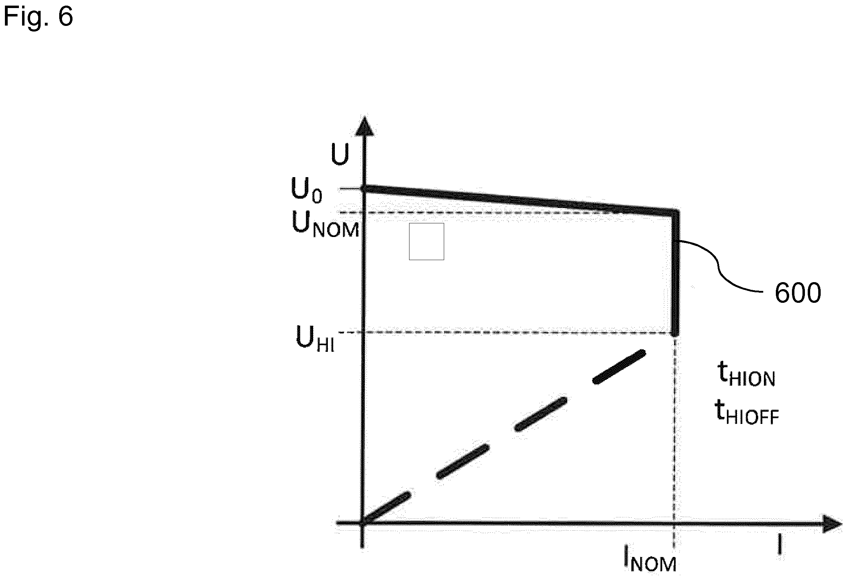

Fig. 6 zeigt ein schematisches Diagramm einer Hiccup-Mode-Ausgangskennlinie 600. An der vertikalen Achse des abgebildeten Koordinatensystems ist eine Ausgangsspannung U eines parametrisierbaren Energieversorgungsgerätes 100 aufgetragen und an der horizontalen Achse ist ein korrespondierender Ausgangsstrom I des parametrisierbaren Energieversorgungsgerätes 100 aufgetragen.

Ist das parametrisierbare Energieversorgungsgerät 100 als eine Spannungsquelle ausgebildet, so ist in einem Leerlauf des parametrisierbaren Energieversorgungsgerätes 100 die Ausgangsspannung U auf eine Leerlaufausgangsspannung U₀ eingestellt und es fließt kein Ausgangsstrom I. Erhöht sich der Ausgangsstrom I, so sinkt die Ausgangsspannung U linear mit einer ersten Steigung bis zu einer Nennlastausgangsspannung U_{NOM}. Bei Erreichen der Nennlastausgangsspannung U_{NOM} durch die Ausgangsspannung U ist der Ausgangsstrom I auf einen Nennlastausgangsstrom I_{NOM} angestiegen. Im weiteren Verlauf wird die Ausgangsspannung U abgesenkt, während der Ausgangsstrom I konstant auf dem Nennlastausgangsstrom I_{NOM} gehalten wird. Sinkt die Ausgangsspannung U unter einen Ausgangsspannungsschwellwert U_{HI}, so wird das parametrisierbare Energieversorgungsgerät 100 für eine erste Zeitspanne t_{HIOFF} abgeschaltet und im Anschluss daran neu gestartet. Stellt sich im weiteren Verlauf nach Ablauf einer zweiten Zeitspanne t_{HION} keine gültige Ausgangsgröße ein, so kann der Neustart abgebrochen werden und nach Ablauf der ersten Zeitspanne t_{HIOFF} erneut gestartet werden. Dieser Vorgang kann gegebenenfalls wiederholt werden.

Gemäß einer Ausführungsform kann die Nennlastausgangsspannung U_{NOM} größer sein als die Leerlaufausgangsspannung U₀. In diesem Fall steigt die Ausgangsspannung U bei einer Erhöhung des Ausgangsstroms I linear mit einer weiteren Steigung von der Leerlaufausgangsspannung U₀ bis zu der Nennlastausgangsspannung U_{NOM} an.

Gemäß einer Ausführungsform können die Leerlaufausgangsspannung U₀, die Nennlastausgangsspannung U_{NOM}, der Ausgangsspannungsschwellwert U_{HI}, der Nennlastausgangsstrom I_{NOM}, die jeweilige Steigung, die erste Zeitspanne t_{HIOFF} und/oder die zweite Zeitspanne t_{HION} eingestellt werden, um die Ausgangskennlinie einzustellen.

Gemäß einer weiteren Ausführungsform kann das parametrisierbare Energieversorgungsgerät 100 bis zu dem Nennlastausgangsstrom I_{NOM} oder einem Stromgrenzwert in einer Spannungsregelung betrieben werden. Im weiteren Verlauf kann das parametrisierbare Energieversorgungsgerät 100 bis zu einem Spannungsgrenzwert oder Stromgrenzwert in einer Spannungsregelung oder einer Stromregelung betrieben werden.

Gemäß einer weiteren Ausführungsform kann das parametrisierbare Energieversorgungsgerät 100 als Stromquelle ausgebildet sein. In diesem Fall kann ebenfalls die Hiccup-Mode-Ausgangskennlinie 600 wie oben beschrieben durchlaufen werden. Es sind lediglich Spannungen und Ströme gegeneinander zu vertauschen.

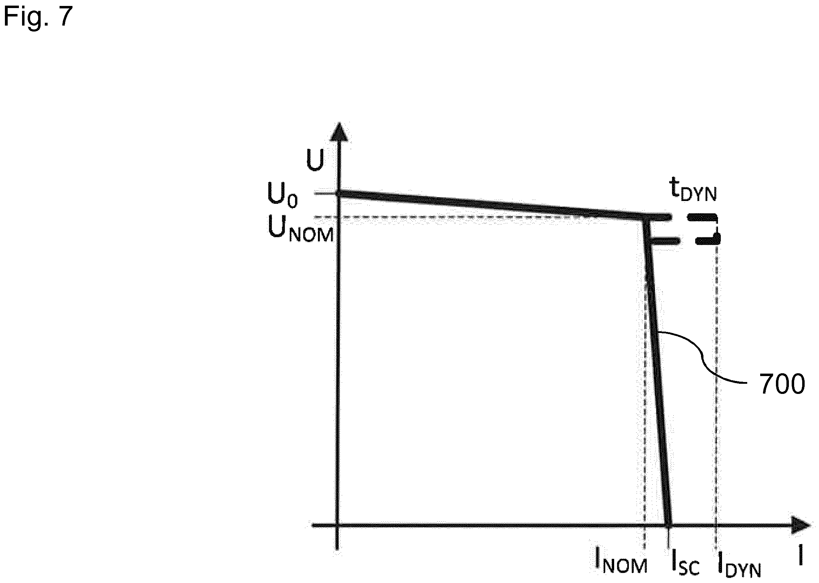

Fig. 7 zeigt ein schematisches Diagramm einer Ausgangskennlinie 700 mit einem dynamischen Boost. An der vertikalen Achse des abgebildeten Koordinatensystems ist eine Ausgangsspannung U eines parametrisierbaren Energieversorgungsgerätes 100 aufgetragen und an der horizontalen Achse ist ein korrespondierender Ausgangsstrom I des parametrisierbaren Energieversorgungsgerätes 100 aufgetragen.

Ist das parametrisierbare Energieversorgungsgerät 100 als eine Spannungsquelle ausgebildet, so ist in einem Leerlauf des parametrisierbaren Energieversorgungsgerätes 100 die Ausgangsspannung U auf eine Leerlaufausgangsspannung U₀ eingestellt und es fließt kein Ausgangsstrom I. Erhöht sich der Ausgangsstrom I, so sinkt die Ausgangsspannung U linear mit einer vorbestimmten Steigung bis zu einer Nennlastausgangsspannung U_{NOM}. Bei Erreichen der Nennlastausgangsspannung U_{NOM} durch die Ausgangsspannung U ist der Ausgangsstrom I auf einen Nennlastausgangsstrom I_{NOM} angestiegen. Im weiteren Verlauf kann der Ausgangsstrom I für eine Zeitspanne t_{DYN} auf einen dynamischen Ausgangsstrom I_{DYN} erhöht werden, während die Ausgangsspannung U auf die Nennlastausgangsspannung U_{NOM} eingestellt bleibt. Im weiteren Verlauf kann die Erhöhung des Ausgangstroms I zurückgenommen werden und der weitere Verlauf der Ausgangskennlinie 700 mit einem dynamischen Boost kann dem einer Foldback-Ausgangskennlinie 500, einer Fuse-Mode-Ausgangskennlinie oder einer Hiccup-Mode-Ausgangskennlinie 600 entsprechen.

Der dynamische Ausgangsstrom I_{DYN} kann ein zeitabhängiger dynamischer Ausgangsstrom sein.

Gemäß einer Ausführungsform kann die Nennlastausgangsspannung U_{NOM} größer sein als die Leerlaufausgangsspannung U₀. In diesem Fall steigt die Ausgangsspannung U bei einer Erhöhung des Ausgangsstroms I linear mit einer weiteren Steigung von der Leerlaufausgangsspannung U₀ bis zu der Nennlastausgangsspannung U_{NOM} an.

Gemäß einer Ausführungsform können die Leerlaufausgangsspannung D₀, die Nennlastausgangsspannung U_{NOM}, der Nennlastausgangsstrom I_{NOM}, der Kurzschlussausgangsstrom I_{SC}, der dynamische Ausgangsstrom I_{DYN}, die vorbestimmte Steigung und/oder die Zeitspanne t_{DYN} eingestellt werden, um die Ausgangskennlinie einzustellen.

Gemäß einer weiteren Ausführungsform kann das parametrisierbare Energieversorgungsgerät 100 bis zu dem dynamischen Ausgangsstrom I_{DYN} in einer Spannungsregelung betrieben werden. Nach Ablauf der Zeitspanne t_{DYN} kann die Stromerhöhung zurückgenommen werden und der Ausgangsstrom I auf den Nennlastausgangsstrom I_{NOM} oder einen Stromgrenzwert zurückgenommen werden. Im weiteren Verlauf kann das weitere Begrenzungsverfahren dem einer Foldback-Ausgangskennlinie 500, einer Fuse-Mode-Ausgangskennlinie oder einer Hiccup-Mode-Ausgangskennlinie 600 entsprechen.

Gemäß einer weiteren Ausführungsform kann das parametrisierbare Energieversorgungsgerät 100 als Stromquelle ausgebildet sein. In diesem Fall kann ebenfalls die Ausgangskennlinie 700 mit dem dynamischen Boost wie oben beschrieben durchlaufen werden. Es sind lediglich Spannungen und Ströme gegeneinander zu vertauschen.

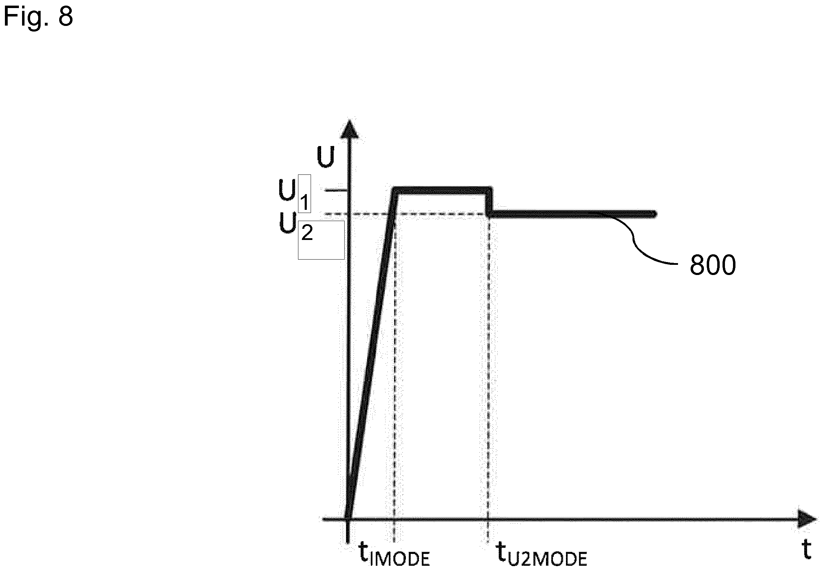

Fig. 8 zeigt ein schematisches Diagramm einer Ladekennlinie 800 eines Speichermediums. An der vertikalen Achse des abgebildeten Koordinatensystems ist eine Ausgangsspannung U eines parametrisierbaren Energieversorgungsgerätes 100 aufgetragen und an der horizontalen Achse ist die Zeit t aufgetragen.

Die Ladekennlinie 800 kann einem Konstantstrom- und Konstantspannungs-Ladeverfahren, wie einem IUU-Ladeverfahren, für ein Speichermedium, wie eine Bleibatterie, zugeordnet sein. In einer ersten Ladephase der Ladekennlinie 800 lädt das parametrisierbare Energieversorgungsgerät 100 das Speichermedium mit einem konstanten Ausgangsstrom I. Um den Ausgangsstrom I konstant zu halten wird die Ausgangsspannung U des parametrisierbaren Energieversorgungsgerätes 100 als Funktion der Zeit kontinuierlich erhöht. Bei Erreichen eines einer Ladeausgangsspannung U₁ durch die Ausgangsspannung U zu einem ersten Zeitpunkt T_{IMDOE} wechselt das parametrisierbare Energieversorgungsgerät 100 in eine zweite Ladephase mit einer konstanten Ausgangsspannung U. Hierbei wird die Ausgangsspannung U auf die Ladeausgangsspannung U₁ eingestellt. Der Ausgangsstrom I fällt in der zweiten Ladephase kontinuierlich ab. Bei Erreichen des zweiten Zeitpunkts t_{U2MODE} wechselt das parametrisierbare Energieversorgungsgerät 100 in eine dritte Ladephase mit einer geringeren konstanten Ausgangsspannung U zum Erhalten der Ladung des Speichermediums. Hierbei wird die Ausgangsspannung U auf eine Ladeschlussausgangsspannung U₂ eingestellt.

Die Ladeausgangsspannung U₁ kann eine hohe Ausgangsspannung nach Ende der ersten Ladephase oder einer Konstantstromladung sein. Ferner kann die erste Ladephase oder die Konstantstromladephase durch den ersten Zeitpunkt T_{IMODE} zeitlich begrenzt sein. Die Ladeschlussausgangsspannung U₂ kann eine Erhaltungsspannung oder eine Ladeschlussspannung zum dauerhaften Laden des Speichermediums sein.

Gemäß einer Ausführungsform können die Ladeausgangsspannung U₁, die Ladeschlussausgangsspannung U₂, der zweite Zeitpunkt t_{U2MODE} und/oder die Zeitspanne zwischen den Zeitpunkten T_{IMODE} und t_{U2MODE} eingestellt werden, um die Ausgangskennlinie einzustellen.

Gemäß einer Ausführungsform können die in den Fig. 4 bis 8 gezeigten Begrenzungsverfahren beliebig erweiterbar sein.

Gemäß einer weiteren Ausführungsform kann das parametrisierbare Energieversorgungsgerät 100 durch eine Auswahl einer Ausgangskennlinie und eine flexible Parametrierung auf unterschiedliche Anforderungen für verschiedene Einsatzzwecke angepasst werden.

Gemäß einer weiteren Ausführungsform kann das parametrisierbare Energieversorgungsgerät 100 durch eine Parametrierung von Ausgangskennlinienparametern oder Grenzwerten an Sicherheitsanforderungen oder für eine verringerte Kabelbelastung angepasst werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Parametrisierbares Energieversorgungsgerät
- 101: Kommunikationsschnittstelle
- 103: Prozessor

- 200: Kommunikationsgerät
- 201: Benutzerschnittstelle
- 203: Nahfeldkommunikationsschnittstelle

- 300: Verfahren
- 301: Übertragen
- 303: Einstellen

- 400: Spannung-Strom-Ausgangskennlinie
- 401: Spannung-Strom-Ausgangskennlinie
- 500: Foldback-Ausgangskennlinie
- 600: Hiccup-Mode-Ausgangskennlinie
- 700: Ausgangskennlinie
- 800: Ladekennlinie
- U: Ausgangsspannung
- U₀: Leerlaufausgangsspannung
- U_{NOM}: Nennlastausgangsspannung
- U_{HI}: Ausgangsspannungsschwellwert
- U₁: Ladeausgangsspannung
- U₂: Ladeschlussausgangsspannung
- I: Ausgangsstrom
- I_{NOM}: Nennlastausgangsstrom
- I_{SC}: Kurzschlussausgangsstrom
- I_{DYN}: Dynamischer Ausgangsstrom
- t: Zeit
- t_{HIOFF}: Erste Zeitspanne
- t_{HION}: Zweite Zeitspanne
- t_{DYN}: Zeitspanne
- t_{IMODE}: Erster Zeitpunkt
- t_{U2MODE}: Zweiter Zeitpunkt

## Patentansprüche

1. Parametrisierbares Energieversorgungsgerät (100), mit:
einer Kommunikationsschnittstelle (101) zum Empfangen von Parametrisierungsdaten über ein Kommunikationsnetzwerk; und
einem Prozessor welcher ausgebildet ist, eine Ausgangskennlinie des parametrisierbaren Energieversorgungsgerätes (100) aus einer Mehrzahl von vorgespeicherten Ausgangskennlinien auszuwählen, um die Ausgangskennlinie einzustellen,
wobei die Ausgangskennlinie eine der folgenden Ausgangskennlinien ist: eine Spannung-Strom-Ausgangskennlinie (400, 401), eine Spannung-Strom-Ausgangskennlinie (400, 401) mit einer Strombegrenzung, eine Foldback-Ausgangskennlinie (500), eine Hiccup-Mode-Ausgangskennlinie (600), ein Fuse-Mode-Ausgangskennlinie, eine Ausgangskennlinie (700) mit einem dynamischen Boost, oder eine Ladekennlinie (800) eines Speichermediums,
wobei der Prozessor (103) ausgebildet ist, eine Steigung der Ausgangskennlinie bei Erreichen eines Amplitudenschwellwertes durch eine Ausgangsspannung U oder einen Ausgangsstrom I des parametrisierbaren Energieversorgungsgerätes (100) zu erhöhen oder zu reduzieren oder eine Steigungsrichtung der Steigung zu ändern,
**dadurch gekennzeichnet, dass**
der Prozessor (103) ausgebildet ist, eine Leerlaufausgangsspannung U₀, eine Nennlastausgangsspannung U_{NOM}, einen Nennlastausgangsstrom I_{NOM}, einen Kurzschlussausgangsstrom I_{SC}, einen dynamische Ausgangsstrom I_{DYN}, eine vorbestimmte Steigung und eine Zeitspanne t_{DYN} einzustellen, um die Ausgangskennlinie einzustellen,
wobei der Prozessor (103) ausgebildet ist, zur Realisierung der Ausgangskennlinie (700) mit einem dynamischen Boost, ab einem Nennlastausgangsstrom I_{NOM} das parametrisierbare Energieversorgungsgerät (100) für eine Zeitspanne t_{DYN} mit einem dynamischen Ausgangsstrom I_{DYN} in einer Spannungsregelung zu betreiben,
nach Ablauf der Zeitspanne T_{DYN} den Ausgangsstrom I auf den Nennlastausgangsstrom I_{NOM} oder einen Stromgrenzwert zurückzunehmen, und
im weiteren Verlauf das weitere Begrenzungsverfahren mit einer Foldback-Ausgangskennlinie (500), einer Fuse-Mode-Ausgangskennlinie (400) oder einer Hiccup-Mode-Ausgangskennlinie (600) zu realisieren, bei denen der Ausgangsstrom I den Kurzschlussausgangsstrom Isc erreicht,
und wobei der Prozessor (103) ferner dazu ausgebildet ist, das parametrisierbare Energieversorgungsgerät (100) entweder als Spannungsquelle oder als Stromquelle zu betreiben und dazu die Spannungen und Ströme gegeneinander zu vertauschen.

2. Parametrisierbares Energieversorgungsgerät (100) nach Anspruch 1, wobei der Prozessor (103) ausgebildet ist, auf der Basis der empfangenen Parametrisierungsdaten einen Ausgangskennlinienparameter der Ausgangskennlinie des parametrisierbaren Energieversorgungsgerätes (100) einzustellen, um die Ausgangskennlinie einzustellen.

3. Parametrisierbares Energieversorgungsgerät (100) nach Anspruch 1 oder 2, wobei die empfangenen Parametrisierungsdaten eine Ausgangskennlinie oder einen Ausgangskennlinienparameter einer Ausgangskennlinie, insbesondere einen Ausgangsstrom (I), eine Ausgangsspannung (U) oder eine Frequenz, kennzeichnen.

4. Parametrisierbares Energieversorgungsgerät (100) nach einem der vorstehenden Ansprüche, wobei der Prozessor (103) ausgebildet ist, auf der Basis der empfangenen Parametrisierungsdaten einen Ausgangskennlinienparameter der Ausgangskennlinie einzustellen, wobei der Ausgangskennlinienparameter der Ausgangskennlinie zumindest einen der folgenden Parameter umfasst: einen Ausgangsstrom (I), einen Amplitudenschwellwert (I_{NOM}, I_{SC}, I_{DYN}) des Ausgangsstroms (I), insbesondere einen maximalen Ausgangsstrom, eine Ausgangsspannung (U), einen Amplitudenschwellwert (Uo, UNOM, U_{HI}, U₁, U₂) der Ausgangsspannung (U), insbesondere eine maximale Ausgangsspannung, eine Frequenz, einen Frequenzschwellwert der Frequenz, einen Zeitpunkt (t_{IMODE}, t_{U2MODE}) oder eine Zeitspanne (t_{HIOFF}, t_{HION}, T_{DYN}).

5. Parametrisierbares Energieversorgungsgerät (100) nach einem der vorstehenden Ansprüche, wobei der Prozessor (103) ferner ausgebildet ist, zur Einstellung der Ausgangskennlinie einen Amplitudenwert einer Ausgangsspannung (U) oder eines Ausgangsstroms (I) des parametrisierbaren Energieversorgungsgerätes (100) zu einem ersten Zeitpunkt (t_{IMODE}) auf einen ersten Amplitudenwert und zu einem zweiten Zeitpunkt (t_{U2MODE}) auf einen zweiten Amplitudenwert einzustellen.

6. Parametrisierbares Energieversorgungsgerät (100) nach einem der vorstehenden Ansprüche, wobei der Prozessor (103) ferner ausgebildet ist, einen Amplitudenwert einer Ausgangsspannung (U) oder eines Ausgangsstroms (I) des parametrisierbaren Energieversorgungsgerätes (100) gemäß der Ausgangskennlinie nachzuregeln, falls ein Ist-Amplitudenwert der Ausgangsspannung (U) oder des Ausgangsstromes (I) des parametrisierbaren Energieversorgungsgerätes (100) sich von einem jeweils korrespondierenden Sollwert gemäß der Ausgangskennlinie unterscheidet.

7. Parametrisierbares Energieversorgungsgerät (100) nach einem der vorstehenden Ansprüche, wobei die Kommunikationsschnittstelle (101) eine Nahfeldkommunikationsschnittstelle umfasst.

8. Parametrisierbares Energieversorgungsgerät (100) nach einem der vorstehenden Ansprüche, wobei die Kommunikationsschnittstelle (101) drahtlos mit elektrischer Energie versorgbar ist.

9. Parametrisierbares Energieversorgungsgerät (100) nach einem der vorstehenden Ansprüche, wobei die Kommunikationsschnittstelle (101) eine Antenne umfasst, welche innerhalb eines Gehäuses des parametrisierbaren Energieversorgungsgerätes (100) angeordnet oder in einer Gehäusewand eines Gehäuses des parametrisierbaren Energieversorgungsgerätes (100) integriert ist.

10. Kommunikationsgerät (200) zum drahtlosen Einstellen einer Ausgangskennlinie eines parametrisierbaren Energieversorgungsgerätes (100) nach Anspruch 1, mit:
einer Benutzerschnittstelle (201) zum Festlegen von Parametrisierungsdaten;
einer Nahfeldkommunikationsschnittstelle (203), welche ausgebildet ist, die festgelegten Parametrisierungsdaten an das parametrisierbare Energieversorgungsgerät (100) über ein Nahfeldkommunikationsnetzwerk auszusenden,
wobei ein Prozessor (103) des parametrisierbaren Energieversorgungsgerätes (100) ausgebildet ist, eine Ausgangskennlinie des parametrisierbaren Energieversorgungsgerätes (100) aus einer Mehrzahl von vorgespeicherten Ausgangskennlinien auszuwählen, um die Ausgangskennlinie einzustellen, wobei die Ausgangskennlinie eine der folgenden Ausgangskennlinien ist: eine Spannung-Strom-Ausgangskennlinie (400, 401), eine Spannung-Strom-Ausgangskennlinie (400, 401) mit einer Strombegrenzung, eine Foldback-Ausgangskennlinie (500), eine Hiccup-Mode-Ausgangskennlinie (600), ein Fuse-Mode-Ausgangskennlinie, eine Ausgangskennlinie (700) mit einem dynamischen Boost, oder eine Ladekennlinie (800) eines Speichermediums,
wobei der Prozessor (103) ferner ausgebildet ist, eine Steigung der Ausgangskennlinie bei Erreichen eines Amplitudenschwellwertes durch eine Ausgangsspannung (U) oder einen Ausgangsstrom (I) des parametrisierbaren Energieversorgungsgerätes (100) zu erhöhen oder zu reduzieren oder eine Steigungsrichtung der Steigung zu ändern,
**dadurch gekennzeichnet, dass**
der Prozessor (103) ausgebildet ist, eine Leerlaufausgangsspannung U₀, eine Nennlastausgangsspannung U_{NOM}, einen Nennlastausgangsstrom I_{NOM}, einen Kurzschlussausgangsstrom Isc, einen dynamische Ausgangsstrom I_{DYN}, eine vorbestimmte Steigung und eine Zeitspanne t_{DYN} einzustellen, um die Ausgangskennlinie einzustellen, wobei der Prozessor (103) ausgebildet ist, zur Realisierung der Ausgangskennlinie (700) mit einem dynamischen Boost, ab einem Nennlastausgangsstrom I_{NOM} das parametrisierbare Energieversorgungsgerät (100) für eine Zeitspanne t_{DYN} mit einem dynamischen Ausgangsstrom I_{DYN} in einer Spannungsregelung zu betreiben,
nach Ablauf der Zeitspanne T_{DYN} den Ausgangsstrom I auf den Nennlastausgangsstrom I_{NOM} oder einen Stromgrenzwert zurückzunehmen, und
im weiteren Verlauf das weitere Begrenzungsverfahren mit einer Foldback-Ausgangskennlinie (500), einer Fuse-Mode-Ausgangskennlinie (400) oder einer Hiccup-Mode-Ausgangskennlinie (600) zu realisieren, bei denen der Ausgangsstrom I den Kurzschlussausgangsstrom Isc erreicht,
und wobei der Prozessor (103) ferner dazu ausgebildet ist, das parametrisierbare Energieversorgungsgerät (100) entweder als Spannungsquelle oder als Stromquelle zu betreiben und dazu die Spannungen und Ströme gegeneinander zu vertauschen.

11. Kommunikationsgerät (200) nach Anspruch 10, wobei die Nahfeldkommunikationsschnittstelle (203) des Kommunikationsgerätes (200) ferner zum drahtlosen Versorgen einer Nahfeldkommunikationsschnittstelle des parametrisierbaren Energieversorgungsgerätes (100) mit elektrischer Energie ausgebildet ist.

12. Verfahren (300) zum Einstellen einer Ausgangskennlinie eines parametrisierbaren Energieversorgungsgerätes (100), mit den folgenden Schritten:
Übertragen (301) von Parametrisierungsdaten an das parametrisierbare Energieversorgungsgerät (100) über ein Kommunikationsnetzwerk; und
Einstellen (303) der Ausgangskennlinie des parametrisierbaren Energieversorgungsgerätes (100) auf der Basis der empfangenen Parametrisierungsdaten,
**gekennzeichnet durch** die folgenden weiteren Schritte:
Auswählen einer Ausgangskennlinie des parametrisierbaren Energieversorgungsgerätes (100) aus einer Mehrzahl von vorgespeicherten Ausgangskennlinien, um die Ausgangskennlinie einzustellen,
wobei die Ausgangskennlinie eine der folgenden Ausgangskennlinien ist: eine Spannung-Strom-Ausgangskennlinie (400, 401), eine Spannung-Strom-Ausgangskennlinie (400, 401) mit einer Strombegrenzung, eine Foldback-Ausgangskennlinie (500), eine Hiccup-Mode-Ausgangskennlinie (600), ein Fuse-Mode-Ausgangskennlinie, eine Ausgangskennlinie (700) mit einem dynamischen Boost, oder eine Ladekennlinie (800) eines Speichermediums,
Erhöhen oder Reduzieren einer Steigung der Ausgangskennlinie bei Erreichen eines Amplitudenschwellwertes durch eine Ausgangsspannung (U) oder einen Ausgangsstrom (I) des parametrisierbaren Energieversorgungsgerätes (100) oder Ändern einer Steigungsrichtung der Steigung,
Einstellen einer Leerlaufausgangsspannung U₀, einer Nennlastausgangsspannung U_{NOM}, eines Nennlastausgangsstroms I_{NOM}, eines Kurzschlussausgangsstroms Isc, eines dynamischen Ausgangsstroms I_{DYN}, einer vorbestimmten Steigung und einer Zeitspanne t_{DYN}, um die Ausgangskennlinie einzustellen,
zur Realisierung der Ausgangskennlinie (700) mit einem dynamischen Boost, Betreiben des parametrisierbaren Energieversorgungsgeräts (100) ab einem Nennlastausgangsstrom I_{NOM} für eine Zeitspanne T_{DYN} mit einem dynamischen Ausgangsstrom I_{DYN} in einer Spannungsregelung,
nach Ablauf der Zeitspanne T_{DYN}, Zurücknehmen des Ausgangsstroms I auf den Nennlastausgangsstrom I_{NOM} oder einen Stromgrenzwert, und
im weiteren Verlauf, Realisieren des weiteren Begrenzungsverfahrens mit einer Foldback-Ausgangskennlinie (500), einer Fuse-Mode-Ausgangskennlinie (400) oder einer Hiccup-Mode-Ausgangskennlinie (600), bei denen der Ausgangsstrom I den Kurzschlussausgangsstrom Isc erreicht, und
Betreiben des parametrisierbaren Energieversorgungsgeräts (100) entweder als Spannungsquelle oder als Stromquelle und dazu Vertauschen der Spannungen und Ströme gegeneinander.

13. Verfahren (300) nach Anspruch 12, wobei die Parametrisierungsdaten über ein Nahfeldkommunikationsnetzwerk übertragen werden.

## Claims

1. Parameterizable energy supply device (100), comprising:
a communication interface (101) for receiving parameterizing data via a communication network; and
a processor, which is configured to choose an output characteristic of the parameterizable energy supply device (100) from a plurality of prestored output characteristics, in order to set the output characteristic,
wherein the output characteristic is one of the following output characteristics: a voltage-current output characteristic (400, 401), a voltage-current output characteristic (400, 401) with a current limitation, a foldback output characteristic (500), a hiccup-mode output characteristic (600), a fuse-mode output characteristic, an output characteristic (700) with a dynamic boost, or a charging characteristic (800) of a storage medium,
wherein the processor (103) is configured to increase or decrease a gradient of the output characteristic when reaching an amplitude threshold by an output voltage U or an output current I of the parameterizable energy supply device (100) or change a gradient direction of the gradient,
**characterized in, that**
the processor (103) is configured to set an open-circuit output voltage U₀, a nominal load output voltage U_{NOM}, a nominal load output current I_{NOM}, a short-circuit output current Isc, a dynamic output current I_{DYN}, a predetermined gradient and a time interval T_{DYN} in order to set the output characteristic,
wherein, for implementing the output characteristic (700) with a dynamic boost, the processor (103) is configured to operate the parameterizable energy supply device (100) with a dynamic output current I_{DYN} in a voltage regulation from a nominal load output current I_{NOM} for a time interval T_{DYN}, after the time interval t_{DYN} expires, to reset the output current I to the nominal load output current I_{NOM} or a current threshold, and in the further course to implement the further limitation procedure with a foldback output characteristic (500), a fuse-mode output characteristic (400) or a hiccup-mode output characteristic (600), in which the output current I reaches the short-circuit output current I_{SC},
and wherein the processor (103) is further configured to operate the parameterizable energy supply device (100) either as a voltage source or as a current source and for this purpose to swap the voltages and currents against each other.

2. Parameterizable energy supply device (100) according to claim 1, wherein the processor (103) is configured to set an output characteristic parameter of the output characteristic of the parameterizable energy supply device (100) on the basis of the received parameterizing data in order to set the output characteristic.

3. Parameterizable energy supply device (100) according to claim 1 or 2, wherein the received parameterizing data characterize an output characteristic or an output characteristic parameter of an output characteristic, in particular an output current (I), an output voltage (U) or a frequency.

4. Parameterizable energy supply device (100) according to one of the preceding claims, wherein the processor (103) is configured to set an output characteristic parameter of the output characteristic on the basis of the received parameterizing data, wherein the output characteristic parameter of the output characteristic comprises at least one of the following parameters: an output current (I), an amplitude threshold (I_{NOM}, I_{SC}, I_{DYN}) of the output current (I), in particular a maximum output current, an output voltage (U), an amplitude threshold (U_{O}, U_{NOM}, U_{HI}, U₁, U₂) of the output voltage (U), in particular a maximum output voltage, a frequency, a frequency threshold for the frequency, or a time point (t_{IMODE}, t_{U2MODE}) or time interval (t_{HIOFF}, t_{HION}, t_{DYN}).

5. Parameterizable energy supply device (100) according to one of the preceding claims, wherein the processor (103) is further configured to set an amplitude value of an output voltage (U) or output current (I) of the parameterizable energy supply device (100) to a first amplitude value at a first time point (t_{IMODE}) and to a second amplitude value at a second time point (t_{U2MODE}) in order to set the output characteristic.

6. Parameterizable energy supply device (100) according to one of the preceding claims, wherein the processor (103) is further configured to adjust an amplitude value of an output voltage (U) or an output current (I) of the parameterizable energy supply device (100) according to the output characteristic when an actual amplitude value of the output voltage (U) or output current (I) of the parameterizable energy supply device (100) differs from a respectively corresponding target value according to the output characteristic.

7. Parameterizable energy supply device (100) according to one of the preceding claims, wherein the communication interface (101) comprises a near field communication interface.

8. Parameterizable energy supply device (100) according to one of the preceding claims, wherein the communication interface (101) is wirelessly suppliable with electrical energy.

9. Parameterizable energy supply device (100) according to one of the preceding claims, wherein the communication interface (101) comprises an antenna, which is arranged within a housing of the parameterizable energy supply device (100) or integrated into a housing wall of a housing of the parameterizable energy supply device (100).

10. Communication device (200) for wirelessly setting an output characteristic of a parameterizable energy supply device (100) according to claim 1, comprising:
a user interface (201) for defining parameterizing data;
a near field communication interface (203), which is configured to send out the defined parameterizing data to the parameterizable energy supply device (100) via a near field communication network,
wherein a processor (103) of the parameterizable energy supply device (100) is configured to choose an output characteristic of the parameterizable energy supply device (100) from a plurality of prestored output characteristics, in order to set the output characteristic,
wherein the output characteristic is one of the following output characteristics: a voltage-current output characteristic (400, 401), a voltage-current output characteristic (400, 401) with a current limitation, a foldback output characteristic (500), a hiccup-mode output characteristic (600), a fuse-mode output characteristic, an output characteristic (700) with a dynamic boost, or a charging characteristic (800) of a storage medium,
wherein the processor (103) is further configured to increase or decrease a gradient of the output characteristic when reaching an amplitude threshold by an output voltage (U) or an output current (I) of the parameterizable energy supply device (100) or change a gradient direction of the gradient,
**characterized in, that**
the processor (103) is configured to set an open-circuit output voltage U₀, a nominal load output voltage U_{NOM}, a nominal load output current I_{NOM}, a short-circuit output current Isc, a dynamic output current I_{DYN}, a predetermined gradient and a time interval T_{DYN} in order to set the output characteristic,
wherein, for implementing the output characteristic (700) with a dynamic boost, the processor (103) is configured to operate the parameterizable energy supply device (100) with a dynamic output current I_{DYN} in a voltage regulation from a nominal load output current I_{NOM} for a time interval T_{DYN}, after the time interval T_{DYN} expires, to reset the output current I to the nominal load output current I_{NOM} or a current threshold, and in the further course to implement the further limitation procedure with a foldback output characteristic (500), a fuse-mode output characteristic (400) or a hiccup-mode output characteristic (600), in which the output current I reaches the short-circuit output current I_{SC},
and wherein the processor (103) is further configured to operate the parameterizable energy supply device (100) either as a voltage source or as a current source and for this purpose to swap the voltages and currents against each other.

11. Communication device (200) according to claim 10, wherein the near field communication interface (203) of the communication device (200) is further configured to wirelessly supply a near field communication interface of the parameterizable energy supply device (100) with electrical energy.

12. Method (300) for setting an output characteristic of a parameterizable energy supply device (100), comprising the following steps:
transmitting (301) parameterizing data to the parameterizable energy supply device (100) via a communication network; and
setting (303) the output characteristic of the parameterizable energy supply device (100) on the basis of the received parameterizing data,
**characterized by** the following further steps:
choosing an output characteristic of the parameterizable energy supply device (100) from a plurality of prestored output characteristics, in order to set the output characteristic,
wherein the output characteristic is one of the following output characteristics: a voltage-current output characteristic (400, 401), a voltage-current output characteristic (400, 401) with a current limitation, a foldback output characteristic (500), a hiccup-mode output characteristic (600), a fuse-mode output characteristic, an output characteristic (700) with a dynamic boost, or a charging characteristic (800) of a storage medium,
increasing or decreasing a gradient of the output characteristic when reaching an amplitude threshold by an output voltage (U) or an output current (I) of the parameterizable energy supply device (100) or changing a gradient direction of the gradient,
setting an open-circuit output voltage U₀, a nominal load output voltage U_{NOM}, a nominal load output current I_{NOM}, a short-circuit output current Isc, a dynamic output current I_{DYN}, a predetermined gradient, and a time interval T_{DYN} in order to set the output characteristic,
for implementing the output characteristic (700) with a dynamic boost, operating the parameterizable energy supply device (100) with a dynamic output current I_{DYN} in a voltage regulation from a nominal load output current I_{NOM} for a time interval t_{DYN},
after the time interval T_{DYN} expires, resetting the output current I to the nominal load output current I_{NOM} or a current threshold, and
in the further course, implementing the further limitation procedure with a foldback output characteristic (500), a fuse-mode output characteristic (400) or a hiccup-mode output characteristic (600), in which the output current I reaches the short-circuit output current I_{SC}, and
operating the parameterizable energy supply device (100) either as a voltage source or as a current source and for this purpose swapping the voltages and currents against each other.

13. Method (300) according to claim 12, wherein the parameterizing data is transmitted via a near field communication network.

## Revendications

1. Appareil d'alimentation en énergie paramétrable (100), comprenant :
une interface de communication (101) destinée à recevoir des données de paramétrage par le biais d'un réseau de communication ; et
un processeur, lequel est configuré pour sélectionner une courbe caractéristique de sortie de l'appareil d'alimentation en énergie paramétrable (100) à partir d'une pluralité de courbes caractéristiques de sortie préalablement mémorisée afin de régler la courbe caractéristique de sortie,
la courbe caractéristique de sortie étant l'une des courbes caractéristiques de sortie suivantes : une courbe caractéristique de sortie tension/courant (400, 401), une courbe caractéristique de sortie tension/courant (400, 401) avec une limitation du courant, une courbe caractéristique de sortie à repli (500), une courbe caractéristique de sortie à mode hoquet (600), une courbe caractéristique de sortie à mode fusible, une courbe caractéristique de sortie (700) avec une suramplification dynamique, ou une courbe caractéristique de charge (800) d'un support d'accumulation,
le processeur (103) étant configuré pour augmenter ou réduire une pente de la courbe caractéristique de sortie lorsqu'une tension de sortie U ou un courant de sortie I de l'appareil d'alimentation en énergie paramétrable (100) atteint une valeur de seuil d'amplitude ou pour modifier une direction de pente de la pente,
**caractérisé en ce que**
le processeur (103) est configuré pour régler une tension de sortie à vide U₀, une tension de sortie sous charge nominale U_{NOM}, un courant de sortie sous charge nominale I_{NOM}, un courant de sortie de court-circuit I_{SC}, un courant de sortie dynamique I_{DYN}, une pente prédéterminée et un intervalle de temps t_{DYN} en vue de régler la courbe caractéristique de sortie,
le processeur (103) étant configuré pour, en vue de réaliser la courbe caractéristique de sortie (700) avec une suramplification dynamique, à partir d'un courant de sortie sous charge nominale I_{NOM}, faire fonctionner l'appareil d'alimentation en énergie paramétrable (100) pendant un intervalle de temps t_{DYN} dans un régime de régulation de la tension avec un courant de sortie dynamique I_{DYN},
après écoulement de l'intervalle de temps t_{DYN}, ramener le courant de sortie I au courant de sortie sous charge nominale I_{NOM} ou à une valeur limite du courant, et
dans la suite du processus, réaliser la suite du procédé de limitation avec une courbe caractéristique de sortie à repli (500), une courbe caractéristique de sortie à mode fusible (400) ou une courbe caractéristique de sortie à mode hoquet (600), avec laquelle le courant de sortie I atteint le courant de sortie de court-circuit I_{SC},
et le processeur (103) étant en outre configuré pour faire fonctionner l'appareil d'alimentation en énergie paramétrable (100) soit en source de tension, soit en source de courant et permuter entre eux à cet effet les tensions et les courants.

2. Appareil d'alimentation en énergie paramétrable (100) selon la revendication 1, le processeur (103) étant configuré pour, sur la base des données de paramétrage reçues, régler un paramètre de courbe caractéristique de sortie de la courbe caractéristique de sortie de l'appareil d'alimentation en énergie paramétrable (100) en vue de régler la courbe caractéristique de sortie.

3. Appareil d'alimentation en énergie paramétrable (100) selon la revendication 1 ou 2, les données de paramétrage reçues caractérisant une courbe caractéristique de sortie ou un paramètre de courbe caractéristique de sortie d'une courbe caractéristique de sortie, notamment un courant de sortie (I), une tension de sortie (U) ou une fréquence.

4. Appareil d'alimentation en énergie paramétrable (100) selon l'une des revendications précédentes, le processeur (103) étant configuré pour régler un paramètre de courbe caractéristique de sortie de la courbe caractéristique de sortie sur la base des données de paramétrage reçues, le paramètre de courbe caractéristique de sortie de la courbe caractéristique de sortie comprenant au moins l'un des paramètres suivants : un courant de sortie (I), une valeur de seuil d'amplitude (I_{NOM}, I_{SC}, I_{DYN}) du courant de sortie (I), notamment un courant de sortie maximal, une tension de sortie (U), une valeur de seuil d'amplitude (U₀, U_{NOM}, U_{HI}, U₁, U₂) de la tension de sortie (U), notamment une tension de sortie maximale, une fréquence, une valeur de seuil de fréquence de la fréquence, un instant (t_{IMODE}, t_{U2MODE}) ou un intervalle de temps (t_{HIOFF}, t_{HION}, t_{DYN}).

5. Appareil d'alimentation en énergie paramétrable (100) selon l'une des revendications précédentes, le processeur (103) étant en outre configuré, en vue de régler la courbe caractéristique de sortie, pour régler une valeur d'amplitude d'une tension de sortie (U) ou d'un courant de sortie (I) de l'appareil d'alimentation en énergie paramétrable (100) à un premier instant (t_{IMODE}) à une première valeur d'amplitude et à un deuxième instant (t_{U2MODE}) à une deuxième valeur d'amplitude.

6. Appareil d'alimentation en énergie paramétrable (100) selon l'une des revendications précédentes, le processeur (103) étant en outre configuré pour réajuster une valeur d'amplitude d'une tension de sortie (U) ou d'un courant de sortie (I) de l'appareil d'alimentation en énergie paramétrable (100) dans le cas où une valeur d'amplitude réelle de la tension de sortie (U) ou du courant de sortie (I) de l'appareil d'alimentation en énergie paramétrable (100) se différencie d'une valeur de consigne correspondante respective selon la courbe caractéristique de sortie.

7. Appareil d'alimentation en énergie paramétrable (100) selon l'une des revendications précédentes, l'interface de communication (101) étant une interface de communication de champ proche.

8. Appareil d'alimentation en énergie paramétrable (100) selon l'une des revendications précédentes, l'interface de communication (101) pouvant être alimentée sans fil en énergie électrique.

9. Appareil d'alimentation en énergie paramétrable (100) selon l'une des revendications précédentes, l'interface de communication (101) comprenant une antenne, laquelle est disposée à l'intérieur d'un boîtier de l'appareil d'alimentation en énergie paramétrable (100) ou est intégrée dans une paroi de boîtier d'un boîtier de l'appareil d'alimentation en énergie paramétrable (100) .

10. Appareil de communication (200) destiné au réglage sans fil d'une courbe caractéristique de sortie d'un appareil d'alimentation en énergie paramétrable (100) selon la revendication 1, comprenant :
une interface utilisateur (201) destinée à spécifier des données de paramétrage ;
une interface de communication de champ proche (203), laquelle est configurée pour envoyer les données de paramétrage spécifiées à l'appareil d'alimentation en énergie paramétrable (100) par le biais d'un réseau de communication en champ proche,
un processeur (103) de l'appareil d'alimentation en énergie paramétrable (100) étant configuré pour sélectionner une courbe caractéristique de sortie de l'appareil d'alimentation en énergie paramétrable (100) à partir d'une pluralité de courbes caractéristiques de sortie préalablement mémorisée afin de régler la courbe caractéristique de sortie,
la courbe caractéristique de sortie étant l'une des courbes caractéristiques de sortie suivantes : une courbe caractéristique de sortie tension/courant (400, 401), une courbe caractéristique de sortie tension/courant (400, 401) avec une limitation du courant, une courbe caractéristique de sortie à repli (500), une courbe caractéristique de sortie à mode hoquet (600), une courbe caractéristique de sortie à mode fusible, une courbe caractéristique de sortie (700) avec une suramplification dynamique, ou une courbe caractéristique de charge (800) d'un support d'accumulation,
le processeur (103) étant en outre configuré pour augmenter ou réduire une pente de la courbe caractéristique de sortie lorsqu'une tension de sortie U ou un courant de sortie I de l'appareil d'alimentation en énergie paramétrable (100) atteint une valeur de seuil d'amplitude ou pour modifier une direction de pente de la pente,
**caractérisé en ce que**
le processeur (103) est configuré pour régler une tension de sortie à vide U₀, une tension de sortie sous charge nominale U_{NOM}, un courant de sortie sous charge nominale I_{NOM}, un courant de sortie de court-circuit I_{SC}, un courant de sortie dynamique I_{DYN}, une pente prédéterminée et un intervalle de temps t_{DYN} en vue de régler la courbe caractéristique de sortie,
le processeur (103) étant configuré pour, en vue de réaliser la courbe caractéristique de sortie (700) avec une suramplification dynamique, à partir d'un courant de sortie sous charge nominale I_{NOM}, faire fonctionner l'appareil d'alimentation en énergie paramétrable (100) pendant un intervalle de temps t_{DYN} dans un régime de régulation de la tension avec un courant de sortie dynamique I_{DYN},
après écoulement de l'intervalle de temps t_{DYN}, ramener le courant de sortie I au courant de sortie sous charge nominale I_{NOM} ou à une valeur limite du courant, et
dans la suite du processus, réaliser la suite du procédé de limitation avec une courbe caractéristique de sortie à repli (500), une courbe caractéristique de sortie à mode fusible (400) ou une courbe caractéristique de sortie à mode hoquet (600), avec laquelle le courant de sortie I atteint le courant de sortie de court-circuit I_{SC},
et le processeur (103) étant en outre configuré pour faire fonctionner l'appareil d'alimentation en énergie paramétrable (100) soit en source de tension, soit en source de courant et permuter à cet effet entre eux les tensions et les courants.

11. Appareil de communication (200) selon la revendication 10, l'interface de communication de champ proche (203) de l'appareil de communication (200) étant en outre configurée pour l'alimentation sans fil d'une interface de communication de champ proche de l'appareil d'alimentation en énergie paramétrable (100) avec de l'énergie électrique.

12. Procédé (300) de réglage d'une courbe caractéristique de sortie d'un appareil d'alimentation en énergie paramétrable (100), comprenant les étapes suivantes :
transmission (301) de données de paramétrage à l'appareil d'alimentation en énergie paramétrable (100) par le biais d'un réseau de communication ; et
réglage (303) de la courbe caractéristique de sortie de l'appareil d'alimentation en énergie paramétrable (100) sur la base des données de paramétrage reçues,
**caractérisé par** les étapes supplémentaires suivantes :
sélection d'une courbe caractéristique de sortie de l'appareil d'alimentation en énergie paramétrable (100) à partir d'une pluralité de courbes caractéristiques de sortie préalablement mémorisée afin de régler la courbe caractéristique de sortie,
la courbe caractéristique de sortie étant l'une des courbes caractéristiques de sortie suivantes : une courbe caractéristique de sortie tension/courant (400, 401), une courbe caractéristique de sortie tension/courant (400, 401) avec une limitation du courant, une courbe caractéristique de sortie à repli (500), une courbe caractéristique de sortie à mode hoquet (600), une courbe caractéristique de sortie à mode fusible, une courbe caractéristique de sortie (700) avec une suramplification dynamique, ou une courbe caractéristique de charge (800) d'un support d'accumulation,
augmentation ou réduction d'une pente de la courbe caractéristique de sortie lorsqu'une tension de sortie (U) ou un courant de sortie (I) de l'appareil d'alimentation en énergie paramétrable (100) atteint une valeur de seuil d'amplitude ou modification d'une direction de pente de la pente,
réglage d'une tension de sortie à vide U₀, d'une tension de sortie sous charge nominale U_{NOM}, d'un courant de sortie sous charge nominale I_{NOM}, d'un courant de sortie de court-circuit I_{SC}, d'un courant de sortie dynamique I_{DYN}, d'une pente prédéterminée et d'un intervalle de temps t_{DYN} en vue de régler la courbe caractéristique de sortie,
en vue de réaliser la courbe caractéristique de sortie (700) avec une suramplification dynamique, fonctionnement de l'appareil d'alimentation en énergie paramétrable (100), à partir d'un courant de sortie sous charge nominale I_{NOM} et pendant un intervalle de temps t_{DYN}, dans un régime de régulation de la tension avec un courant de sortie dynamique I_{DYN},
après écoulement de l'intervalle de temps t_{DYN}, retour du courant de sortie I au courant de sortie sous charge nominale I_{NOM} ou à une valeur limite du courant, et
dans la suite du processus, réalisation de la suite du procédé de limitation avec une courbe caractéristique de sortie à repli (500), une courbe caractéristique de sortie à mode fusible (400) ou une courbe caractéristique de sortie à mode hoquet (600), avec laquelle le courant de sortie I atteint le courant de sortie de court-circuit I_{SC},
fonctionnement de l'appareil d'alimentation en énergie paramétrable (100) soit en source de tension, soit en source de courant et permutation à cet effet entre eux des tensions et des courants.

13. Procédé (300) selon la revendication 12, les données de paramétrage étant transmises par le biais d'un réseau de communication en champ proche.
